# EUROPÄISCHE PATENTSCHRIFT

(11) **EP 2 701 950 B1**
(45) Veröffentlichungstag und Bekanntmachung des Hinweises auf die Patenterteilung: **30.12.2015**
(21) Anmeldenummer: 11770797.6
(22) Anmeldetag: 19.10.2011
(51) Int. Cl.: B60R 1/078, F16D 7/00, F16D 7/10

(54) **SELBSTTÄTIG SCHALTENDE KUPPLUNG FÜR EINE KRAFTFAHRZEUG-AUSSENSPIEGELVERSTELLUNG**
AUTOMATICALLY SWITCHING CLUTCH FOR A MOTOR VEHICLE EXTERIOR MIRROR ADJUSTMENT MEANS
EMBRAYAGE À SERRAGE AUTOMATIQUE POUR LE RÉGLAGE D'UN RÉTROVISEUR EXTÉRIEUR DE VÉHICULE AUTOMOBILE

(30) Priorität: 27.04.2011 DE 202011000988 U; 17.05.2011 DE 102011050440
(43) Veröffentlichungstag der Anmeldung: 05.03.2014
(73) Patentinhaber: MEKRA Lang GmbH & Co. KG, 91465 Ergersheim (DE)
(72) Erfinder: LANG, Werner, 91465 Ergersheim (DE); POPP, Albrecht, 91465 Ergersheim (DE); FINKENBERGER, Elmar, 91587 Adelshofen (DE)
(74) Vertreter: Winter, Brandl, Fürniss, Hübner, Röss, Kaiser, Polte - Partnerschaft mbB
(86) Internationale Anmeldenummer: PCT/EP2011/068279
(87) Internationale Veröffentlichungsnummer: WO 2012/146321

(56) Entgegenhaltungen:
- DE-A1- 3 938 961
- GB-A- 2 131 503
- US-A- 4 468 206
- US-B1- 6 325 518

## Beschreibung

Die vorliegende Erfindung betrifft eine selbsttätig schaltende Kupplung, insbesondere für eine Außenspiegelanordnung für Kraftfahrzeuge, gemäß dem Oberbegriff des Anspruchs 1.

In manchen Fällen kann es notwendig sein, nicht nur den Winkel bzw. die Ausrichtung eines Fahrzeugaußenspiegels, sondern auch dessen Entfernung von der Fahrzeugkarosserie einzustellen. Eine solche Längeneinstellung kann z. B. bei einem Nutzfahrzeug mit einem überbreiten Anhänger notwendig sein, um dem Fahrer eine ausreichende Sicht nach hinten zu bieten. Wenn kein überbreiter Anhänger gezogen werden soll, kann über die Längeneinstellung der weit nach außen ragende Fahrzeugaußenspiegel näher an die Karosserie gebracht werden, was nicht nur aerodynamische Vorteile hat, sondern auch das Risiko einer Beschädigung des Außenspiegels beim Rangieren oder Durchfahren von engen Durchfahrten mindert.

Aus der DE 3938961 A1 ist eine teleskopierbare Verstellung für einen Außenspiegel bekannt. Dabei ist der Außenspiegel an einem stufenlos einstellbaren Teleskoprohr befestigt, das seinerseits über zwei Flachprofile eines Halterahmens an der Fahrzeugkabine angelenkt ist. Die Längenverstellung des Außenspiegels erfolgt dabei über einen Stellmotor, der eine Gewindespindel, die mit einem Rohr der Teleskoprohranordnung in Wirkverbindung steht, in eine entsprechende Richtung antreibt.

Da der Außenspiegel ständig der Witterung ausgesetzt ist, kann es dazu kommen, dass sich die Teleskoprohranordnung aufgrund von Schmutz- oder Staubablagerungen, Einfrieren, Rost, etc. verklemmt und nicht mehr verstellen lässt. Wenn der Fahrer in diesem Fall den Elektromotor zum Verstellen des Außenspiegels betätigt, kann der Motor aufgrund der blockierten Verstellmimik Schaden nehmen.

Gleiches gilt, wenn der Fahrer den Elektromotor nicht rechtzeitig stoppt, bevor das Teleskoprohr seine jeweilige Verstellendposition erreicht.

Ferner hat sich gezeigt, dass sich die Gewindespindel und das Teleskoprohr leicht verklemmen können, wenn beim Ein- oder Ausfahren des Teleskoprohrs die Gewindespindel das Teleskoprohr gegen einen Anschlag treibt. Wenn anschließend das Teleskoprohr wieder in die entgegengesetzte Richtung bewegt werden soll, kann das Antriebsmoment der elektrischen Stelleinheit alleine die verklemmten Teile nicht lösen.

Aus dem Stand der Technik sind diverse Kupplungseinrichtungen zwischen dem Stellmotor und dem eigentlichen Antrieb des Teleskoprohrs, also z.B. einer Gewindespindel oder einem Zugmittelantrieb bekannt. Beispielsweise beschreibt die US 6325518 B1 einen Antrieb für einen teleskopierbaren Kraftfahrzeugsaußenspiegel, bei dem zwischen Stellmotor und Teleskoprohrantrieb eine Kupplung eine Übertragung eines Drehmoments von dem Motor über eine erste Kupplungsscheibe auf eine zweite Kupplungsscheibe eines Zahnriemenantriebs ermöglicht. Die eine Kupplungsscheibe ist über eine Feder gegen die andere Scheibe vorgespannt, wobei Erhebungen, die an der zweiten Kupplungsscheibe ausgebildet sind, in entsprechende Vertiefungen eingreifen, die an der ersten Kupplungsscheibe vorgesehen sind. Bei einem Überlastmoment wird die erste Kupplungsscheibe gegen die Federkraft verdrängt, so dass eine Relativdrehung zwischen beiden Kupplungsscheiben und möglich ist.

Bei Nutzfahrzeugaußenspiegelverstellungen bedarf es einer einfachen, kostengünstigen, wartungsarmen und robusten Lösung. Es hat sich in der Praxis gezeigt, dass keine der bekannten Kupplungen für diesen Zweck geeignet ist. Aus Gründen des Überlastschutzes scheiden nicht schaltbare Kupplungen aus. Fremdgeschaltete Kupplungen sind zu aufwendig und auch nicht zweckmäßig. Vor diesem Hintergrund bedarf es einer selbsttätig schaltenden Kupplung, welche die Probleme des Standes der Technik überwindet.

Vor diesem Hintergrund besteht die Aufgabe der vorliegenden Erfindung darin, eine Kupplungseinrichtung zu schaffen, die den elektrischen Stellmotor vor Überlastung schützt und eine zuverlässigere Längenverstellung des Fahrzeugaußenspiegels bzw. des Haltebügels, an welchem der Fahrzeugaußenspiegel montiert wird, zur fahrzeugseitigen Halterung ermöglicht.

Diese Aufgabe wird hinsichtlich einer Kupplungseinrichtung durch die Merkmale des Anspruchs 1 und hinsichtlich einer Außenspiegelanordnung durch die Merkmale des Anspruchs 8 gelöst.

Eine erfindungsgemäße Kupplungseinrichtung dient zur Übertragung einer Rotationsenergie zwischen einem Antrieb und einem Abtrieb, insbesondere zwischen einer elektrischen Stelleinheit und einem Stellglied, wobei die Kupplungseinrichtung eine Übertragung eines Lastdrehmoments von der elektrischen Stelleinheit auf das Stellglied in beide Richtungen erlaubt und bei einem Überlastmoment größer als einem vorbestimmten Grenzdrehmoment selbsttätig eine Relativdrehung zwischen der elektrischen Stelleinheit und dem Stellglied erlaubt, wobei die Kupplungseinrichtung bei einem Drehmomentrichtungswechsel ohne vorheriges Überschreiten des Grenzdrehmoments über einen vorbestimmten Freigangswinkel kein Lastdrehmoment überträgt.

Eine erfindungsgemäße Kupplungseinrichtung, die zur Übertragung einer Rotationsenergie zwischen einer Antriebsseite und einer Abtriebsseite bzw. zwischen einer elektrischen Stelleinheit und einem Stellglied dient, erlaubt eine Übertragung eines für die Verstellung des Stellglieds notwendigen Lastdrehmoments von der elektrischen Stelleinheit auf das Stellglied in beide Drehrichtungen und erlaubt bei einem Überlastmoment größer als einem vorbestimmten Grenzdrehmoment selbsttätig eine Relativdrehung zwischen der elektrischen Stelleinheit und dem Stellglied. Ferner ist die Kupplungseinrichtung so gestaltet, dass sie bei einem Drehmomentrichtungswechsel über einen vorbestimmten Freigangswinkel das für die Verstellung des Stellglieds notwendige Lastdrehmoment ohne vorheriges Überschreiten des Grenzdrehmoments nicht überträgt.

Während die Kupplungseinrichtung gemäß der US 6325518 B1 nur bei einer Überlastsituation anspricht, also bei einem Überschreiten des Grenzmoments, hat die Kupplungseinrichtung gemäß der vorliegenden Erfindung einen Freigang auch bei einem ganz normalen Drehmomentrichtungswechsel, d.h. ohne vorheriges Überschreiten des Grenzmoments. Mit anderen Worten, der Freigang der Kupplungseinrichtung gemäß der vorliegenden Erfindung ist nicht auf eine Überlastsituation beschränkt. Hieraus ergibt sich in der Praxis eine Anzahl von Vorteilen.

Die erfindungsgemäße Kupplungseinrichtung kann bei einem motorisch verstellbaren Fahrzeugaußenspiegel bzw. Haltebügel, an welchem der Fahrzeugaußenspiegel montiert wird, verwendet werden und dient dabei zur Übertragung einer Rotationsenergie von einer elektrischen Stelleinheit auf ein Stellglied, das unmittelbar oder mittelbar mit dem Außenspiegel verbunden ist. Es überträgt hierbei in beide Drehrichtungen ein für die Verstellung des Haltebügels notwendiges Lastdrehmoment von der elektrischen Stelleinheit auf das Stellglied und lässt bei einem Überlastmoment größer als einem vorbestimmten Grenzdrehmoment selbsttätig eine Relativdrehung zwischen der elektrischen Stelleinheit und dem Stellglied zu. Bei einem Drehmomentrichtungswechsel, d.h. beim Ändern der Verfahrrichtung des Haltebügels, überträgt die Kupplungseinrichtung über einen vorbestimmten Freigangswinkel nicht das für die Verstellung des Haltebügels notwendige Lastdrehmoment, so dass sie vor der Übertragung des Lastdrehmoments selbsttätig eine durch den Freigangwinkel begrenzte Relativdrehung zwischen der elektrischen Stelleinheit und dem Stellglied zulässt.

Die erfindungsgemäße Kupplung ist somit so konfiguriert, dass bei einem Drehmomentrichtungswechsel über einen vorbestimmten Freigangswinkel kein Verstelldrehmoment übertragen wird. Dadurch wird zum einen ein Überlastschutz gewährleistet und zum anderen bei einem Drehrichtungswechsel ein lastfreies Anlaufen der elektrischen Stelleinheit auf eine bestimmte Nenndrehzahl ermöglicht. Beides wirkt sich positiv auf den Betrieb und die Lebensdauer der elektrischen Stelleinheit aus.

Bei der erfindungsgemäßen Kupplung handelt es sich somit um eine selbsttätig schaltende Kupplung, insbesondere eine drehmomentgeschaltete Kupplung. Die erfindungsgemäße Kupplung unterscheidet sich von bekannten drehmomentgeschalteten Kupplungen, wie Rutschkupplungen, Sperrkörperkupplungen oder Brechbolzenkupplungen darin, dass sie in beide Drehrichtungen ein Lastdrehmoment übertragen kann, in beide Richtungen bei Überschreiten eines Überlastmoments eine Relativbewegung zwischen An- und Abtrieb, d. h. zwischen der elektrischen Stelleinheit und dem Stellglied, erlaubt, in beide Richtungen bei Unterschreiten des Überlastmoments selbsttätig wieder einkuppeln und das Lastmoment übertragen kann, und bei einem Drehmomentrichtungswechsel, unabhängig von der Richtung und ohne vorheriges Überschreiten des Überlastmoments, über einen vorbestimmten Freigangswinkel kein Lastdrehmoment überträgt und somit über den Freigangswinkel eine lastfreie oder nahezu lastfreie (Leerlaufdrehmoment) Relativdrehung zwischen An- und Abtrieb zulässt.

Insbesondere kann die erfindungsgemäße Kupplung so gestaltet werden, dass sie in beide Drehrichtungen identische Eigenschaften besitzt, d.h. die oben genannten Momente wie das übertragbare Lastdrehmoment und das nicht übertragbare Überlastmoment in beiden Richtungen gleich groß sind.

Da innerhalb des Freigangswinkels eine lastfreie oder nahezu lastfreie Relativdrehung zwischen An- und Abtrieb möglich ist, kann der Stellmotor nach einem Richtungswechsel ohne Lastdrehmoment, d.h. lastfrei, angefahren werden und der Stellmotor muss lediglich das Beschleunigungsdrehmoment aufbringen, welches für die Beschleunigung aller zu bewegenden Massen der Längenverstellungsmimik erforderlich ist. Dadurch kann der Stellmotor schneller sein Nenndrehmoment und seine Nenndrehzahl erreichen.

Durch das lastfreie Anfahren wird nach Durchlaufen des Freigangwinkels und beim Einkoppeln von elektrischer Stelleinheit und Stellglied ein Teil der Bewegungsenergie der beschleunigten Massen in Form eines Stoßes an das Stellglied übertragen, bevor sich die elektrische Stelleinheit und das Stellglied im gekoppelten und synchronen Zustand miteinander drehen und das Lastdrehmoment über die Kupplung übertragen wird. Dieser in der normalen Getriebetechnik unerwünschte und meist mittels federgedämpften und drehnachgiebige Kupplungen unterbundene Effekt ist bei der erfindungsgemäßen Kupplungseinrichtung gerade beabsichtigt, um ein zeitweises Verklemmen des Haltebügels und des Gehäuses, z.B. aufgrund von Verschmutzung, Einfrieren, etc., zu lösen.

Gemäß einem weiteren oder anderen Aspekt ist der Freigangswinkel kleiner als 90°. Ein zu großer Freigangswinkel würde zu einem zu großen Spiel zwischen An- und Abtrieb führen, was eine Einstellung, insbesondere Feineinstellung des Außenspiegels gerade zu unmöglich machen würde. Vorzugsweise liegt der Freigangswinkel im Bereich von 15° bis 25°. Dieser bevorzugte Winkelbereich ermöglicht einerseits einen ausreichenden Drehwinkelbereich für das Anfahren der elektrischen Stelleinheit und hält andererseits das Spiel zwischen An- und Abtrieb in einem akzeptablen Bereich, so dass die Kupplung bei einem Drehrichtungswechsel relativ schnell einkuppelt und das Ansprechverhalten der Kupplung bei der Verstellung des Außenspiegels zufriedenstellend ist.

Um den Haltebügel bzw. den Außenspiegel an einer bestimmten Position festzuhalten bzw. zu fixieren, kann gegebenenfalls eine Klemmeinrichtung vorgesehen sein, welche über einen Kraft- bzw. Reibfluss eine Relativbewegung von Haltebügel und einem Führungsabschnitt bzw. einem Gehäuse der Außenspiegelhalterung unterbindet.

Ferner kann die elektrische Stelleinheit den Haltebügel selbst dann verstellen, wenn der Haltebügel an einem Führungsabschnitt über die Klemmeinrichtung festgeklemmt oder über eine ähnliche Einrichtung schwer verschiebbar fixiert ist, wobei das zum Verstellen des Haltebügels notwendige und von der Kupplungseinrichtung übertragbare Lastdrehmoment größer als das von der Klemmeinrichtung aufgebrachte Reibungsmoment und kleiner als das Grenzdrehmoment der Kupplungseinrichtung ist.

Durch die Klemmung des Haltebügels wird die kinematische Wirkkette zwischen der elektrischen Stelleinheit und dem Haltebügel entkoppelt. Das Spiel (Freigangswinkel) in der Kupplung wirkt sich also nicht als Spiel zwischen dem Haltebügel und dem Gehäuse, an dem der Haltebügel geführt ist, aus. Dies bedeutet, dass der Haltebügel und somit der Außenspiegel bei nicht betriebener elektrischer Stelleinheit oder bei einem Drehmomentrichtungswechsel der elektrischen Stelleinheit an seiner Position fixiert ist.

Erfindungsgemäß kann die Kupplungseinrichtung eine von der elektrischen Stelleinheit angetriebene Kupplungsglocke oder einen Kupplungsring und einen mit dem Stellglied drehfest verbundenen Mitnehmer aufweisen. Dabei kann der Mitnehmer über den Umfang gleichmäßig verteilte, radial nach außen federbelastete und gegen eine Innenwandung der Kupplungsglocke gespannte Wälzkörper oder Gleitkörper aufweisen und die Innenwandung der Kupplungsglocke über den Umfang gleichmäßig verteilte, vorzugsweise wellenförmige, Erhebungen bzw. Vorsprünge aufweisen, welche die Wälzkörper oder Gleitkörper bei einem Überlastmoment größer als dem vorbestimmten Grenzdrehmoment radial nach innen verdrängen.

Wie bereits oben erwähnt wird durch das lastfreie Anlaufen ein Teil der Bewegungsenergie der Kupplungsglocke und des Trägheitsmoment der elektrischen Stelleinheit in Form eines Stoßes an die Walzen und damit an den Mitnehmer weitergegeben, bevor sich der Formschluss zwischen den Walzen und den Vorsprüngen, d.h. zwischen der Kupplungsglocke und dem Mitnehmer einstellt und das zu übertragenden Moment übertragen wird.

Falls das normale Lastdrehmoment zum Lösen der miteinander verklemmten oder verkeilten An- und Abtriebselemente nicht ausreicht, übersteigt das von der elektrischen Stelleinheit übertragenen Drehmoment das vorbestimmten Grenzdrehmoment und die Kupplung überrastet, bis die Wälzkörper auf den nächsten jeweiligen Vorsprung treffen, usw. Bei einem Verklemmen des Haltebügels aufgrund von Verschmutzungen wird die Kupplung also überrasten. Durch wiederholtes Überrasten kommt es in kurzen Abständen zu wiederholten Drehmomentstößen und Impulseinträgen auf das Stellglied und auf den mit dem Stellglied verbundenen Haltebügel, was zum allmählichen Lösen der Schmutzpartikel führt.

Der Freigangswinkel kann wird durch den Abstand von zwei benachbarten Erhebungen, insbesondere durch den Abstand von einander zugewandten Flanken von zwei benachbarten Erhebungen, definiert.

In dem Mitnehmer können radial verlaufende, nach außen mündende und über den Umfang gleichmäßig verteilte Ausnehmungen ausgebildet sind, in denen Druckfedern angeordnet sind, die die Wälzkörper bzw. Gleitkörper radial nach außen drücken. Dabei befinden sich die Wälzkörper bzw. Gleitkörper größtenteils in den Ausnehmungen und sind darin geführt. Dadurch kann das Drehmoment von der Kupplungsglocke über die Wälzkörper auf den Mitnehmer übertragen werden.

Die Federkonstante der Druckfedern kann entsprechend den am Innenumfang der angetriebenen Kupplungsglocke ausgebildeten Erhebungen, insbesondere entsprechende der Höhe der Erhebungen, so gewählt sein, dass die Wälzkörper bzw. Gleitkörper durch die Erhebungen zum Überwinden derselbigen nur dann ausreichend weit radial nach innen verdrängt werden, wenn an der Kupplungseinrichtung ein Überlastmoment größer als das vorbestimmte Grenzdrehmoment anliegt. Die Höhe der Erhebungen entspricht dem Federweg, um welchen die Wälzkörper und damit die Druckfedern von den Erhebungen der Kupplungsglocke radial nach innen gedrückt werden.

Das Abrollmoment der Wälzkörper bzw. das Reibmoment der Gleitkörper, um zwischen zwei Erhebungen am Innenumfang der Kupplungsglocke in Umfangsrichtung die Wälzkörper abzurollen bzw. die Gleitkörper zu verschieben, ist vorzugsweise kleiner als das Lastdrehmoment ist. Dadurch wird die Relativbewegung der beiden Kupplungsteile über den Freigangswinkel ermöglicht.

Die Anzahl der Erhebungen kann höher als die der Wälzkörper oder Gleitkörper sein. Dadurch können die Rastwinkel und somit das Spiel zwischen Kupplungsglocke und Mitnehmer bzw. zwischen elektrischer Stelleinheit und Stellglied gering gehalten werden.

Die elektrische Stelleinheit kann von innerhalb der Kabine ansteuerbar sein, was für die Bedienperson komfortabler ist. Die Verstellung des Haltebügels über die elektrische Stelleinheit kann auf verschiedene Weise erfolgen. Zum Beispiel kann die Stelleinheit als Stellglied eine Spindel antreiben, welche mit einem in einem mit dem Haltebügel verbundenen Gleitstück eingeformten Trapezgewinde in Eingriff steht. Wenn der Haltebügel als Rohr ausgebildet ist, kann die Spindel im Inneren des Haltebügels Platz finden, wodurch eine besonders kompakte Bauweise erreicht wird. Alternativ kann der Haltebügel über mit dem Gleitstück gekoppelte Seilzüge oder über einen Zahnstangenantrieb auf einfache Weise verstellt werden.

Gemäß einem weiteren oder anderen Aspekt der Erfindung ist der Haltebügel für einen Fahrzeugaußenspiegel in einem Gehäuse verschiebbar aufgenommen, welches seinerseits an einer fahrzeugseitigen Halterung befestigt ist. Dabei weist das Gehäuse einen, vorzugsweise einstückig aus Kunststoff ausgebildeten, Gehäuseabschnitt auf, der den Haltebügel allein führt. In dem Gehäuseabschnitt kann neben dem verschiebbar aufgenommen Haltebügel auch eine motorisch betriebene Einstellmimik, d.h. die elektrische Stelleinheit, das mit dem Haltebügel verbundene Stellglied und die erfindungsgemäße Kupplungseinrichtung, untergebracht werden.

Ein fahrzeugseitiger Außenumfangsabschnitt der elektrischen Stelleinheit kann zu einer umlaufenden Innenwandung des ersten Gehäuseabschnitts komplementär ausgebildet sein. Somit kann die elektrische Stelleinheit den ersten Gehäuseabschnitt fahrzeugseitig abschließen und abdichten, so dass sich die gesamte Verstellmimik und die elektrische Stelleinheit abgedichtet im Gehäuseabschnitt befinden. Vorzugsweise kann ein Getriebedeckel der elektrischen Stelleinheit bzw. des Elektromotors diese Verschluss- bzw. Abdichtfunktion übernehmen. Dadurch ergibt sich nicht nur ein einfacher Aufbau, sondern auch eine Integration zweier Funktionen in einem Bauteil.

Das Gehäuse kann ferner einen zweiten Gehäuseabschnitt aufweisen, über welchen die fahrzeugseitige Halterung mit dem ersten Gehäuseabschnitt verbunden werden kann. Somit kann der erste Gehäuseabschnitt entsprechend seiner Hauptfunktion, nämlich der alleinigen Aufnahme und Führung des Haltebügels und der Verstellmimik ausgelegt werden, und die Fixierung an der fahrzeugseitigen Halterung über einen speziell dafür vorgesehenen zweiten Gehäuseabschnitt, vorzugsweise ebenfalls einstückig aus Kunststoff, erfolgen. Dadurch kann beispielsweise erreicht werden, dass ein baugleicher erster Gehäuseabschnitt an unterschiedlichen fahrzeugseitigen Haltezungen befestigt werden kann, indem lediglich ein entsprechend anders gestalteter zweiter Gehäuseabschnitt verwendet wird.

Der erste oder zweite Gehäuseabschnitt, vorzugsweise beide Gehäuseabschnitte, hat zur Befestigung an der Halterung einen fahrzeugseitigen Befestigungsabschnitt. Dieser fahrzeugseitige Befestigungsabschnitt kann eine Metallplatte aufweisen, die als lokale Verstärkung zur Befestigung des Gehäuseabschnitts an der Halterung dient, ohne dabei das Gewicht des Gehäuses insgesamt wesentlich zu erhöhen. Um die Handhabbarkeit zu verbessern, kann die Metallplatte in Form eines in den Gehäuseabschnitt eingegossenen Metalleinlegers in den fahrzeugseitigen Befestigungsabschnitt des Gehäuses integriert werden. Über die Dimensionierung der Metallplatte bzw. des Metalleinlegers können die Eigenschaften des Gehäuses verändert werden und den jeweiligen Anforderungen maßgeschneidert angepasst werden. Erfindungsgemäß kann somit die Kraft vom Gehäuse auf sichere Weise in die fahrzeugseitige Halterung eingeleitet werden.

Die vorliegende Erfindung wird anhand der beigefügten Zeichnung näher dargestellt. In den einzelnen Figuren der Zeichnung ist:
Fig. 1 eine Querschnittsansicht einer Außenspiegelanordnung, in welcher eine Kupplungseinrichtung gemäß einer Ausführungsform der Erfindung angeordnet ist;
Fig. 2 eine Querschnittsansicht entlang der Linie II-II in der Fig. 1;
Fig. 3 eine Querschnittsansicht entlang der Linie III-III in der Fig. 1;
Fig. 4 eine Frontansicht eines Gleitstücks der Außenspiegelanordnung;
Fig. 5 eine Seitenansicht des Gleitstücks;
Fig. 6 eine Querschnittsansicht des Gleitstücks;
Fig. 7 einen Endabschnitt eines Haltebügels der Außenspiegelanordnung;
Fig. 8 eine Stirnansicht des Endabschnitts des Haltebügels;
Fig. 9 eine Querschnittsansicht einer zwischen einer elektrischen Stelleinheit und Spindel geschalteten Kupplungseinrichtung gemäß der Ausführungsform;
Fig. 10 ein Drehmoment-Zeit-Diagramm, das die beim Verstellen des Haltebügels an der Kupplungseinrichtung auftretenden Drehmomente zeigt;
Fig. 11 ein weiteres Drehmoment-Zeit-Diagramm, das die beim Verstellen des Haltebügels an der Kupplungseinrichtung auftretenden Drehmomente zeigt; und
Fig. 12 ein weiteres Drehmoment-Zeit-Diagramm, das die beim Lösen eines verklemmten Haltebügels an der Kupplungseinrichtung auftretenden Drehmomente zeigt.

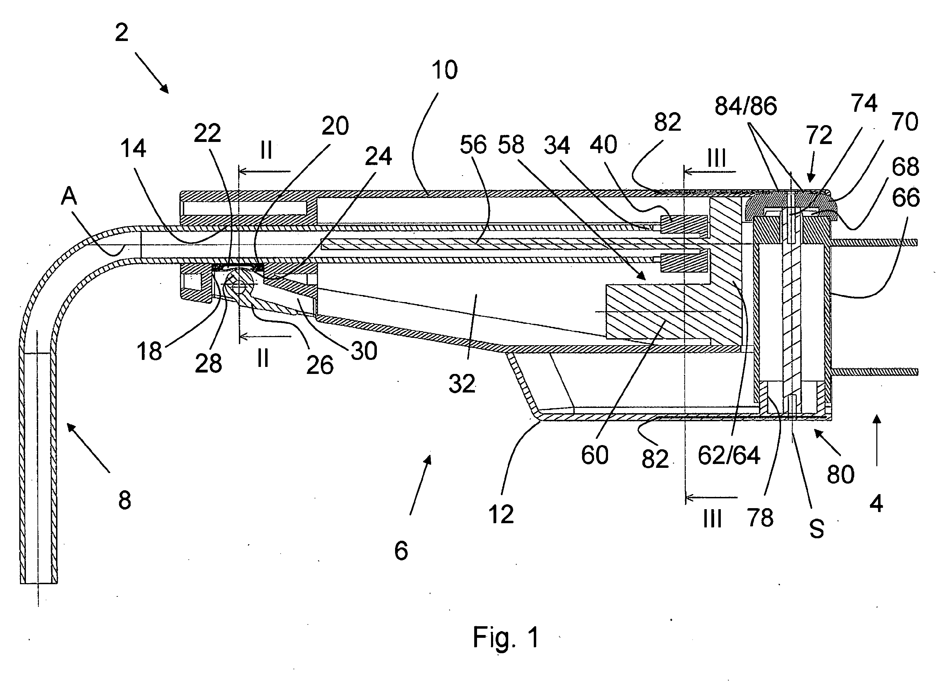

Die Fig. 1 zeigt eine Querschnittsansicht einer Außenspiegelanordnung 2 mit einer fahrzeugseitigen Halterung 4, einem Gehäuse 6 und einem Haltebügel 8. Der Haltebügel 8 dient zur Befestigung eines nicht gezeigten Fahrzeugaußenspiegels.

Das Gehäuse 6 besteht aus einem ersten Gehäuseabschnitt 10 und einem zweiten Gehäuseabschnitt 12, wobei der erste Gehäuseabschnitt 10 alleine den Haltebügel 8 trägt und führt und der zweite Gehäuseabschnitt 12 im Wesentlichen nur zur Befestigung des Gehäuses 2 an der Halterung 4 dient.

Der erste Gehäuseabschnitt 10 weist auf seiner von der Halterung 4 abgewandten Seite einen Gleitabschnitt 14 auf, in welchem der Haltebügel 8 verschiebbar aufgenommen ist. Der Gleitabschnitt 14 wird im Wesentlichen durch eine zylindrische Ausnehmung im ersten Gehäuseabschnitt 10 gebildet, welche mit (nicht gezeigten) Gleitleisten aus POM versehen ist.

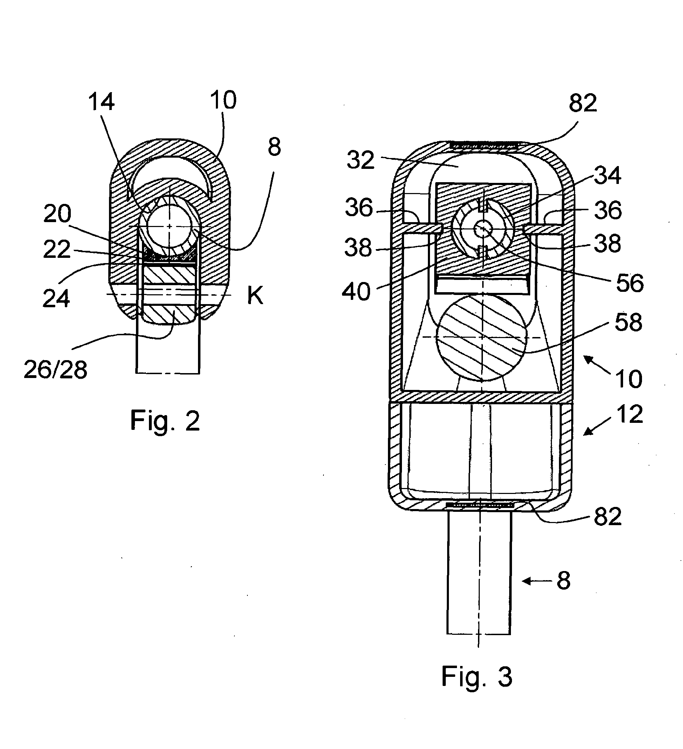

Der Gleitabschnitt 14 weist eine radiale Öffnung 18 auf, in der ein Klemmstück 20 radial verschiebbar aufgenommen ist. Das Klemmstück 20 ist komplementär zu dem Haltebügel 8, d.h. zylindrisch konkav, ausgebildet und liegt flächig an einer Außenwandung des Haltebügels 8 an (siehe Fig. 2). Das Klemmstück 20 hat auf seiner dem Haltebügel 8 abgewandten Seite eine Ausnehmung 22, die von einer Blattfeder 24 überspannt wird.

Im Gleitabschnitt 14 ist ferner ein manuell betätigbarer Spannhebel 26 drehbar angeordnet, wobei die Schwenkachse K eine zur Mittelachse A des Haltebügels 8 radial beabstandete Querachse ist, die sich radial außerhalb des Klemmstücks 20 befindet. Der Spannhebel 26 weist eine Nocke 28 auf, welche beim Schwenken des Spannhebels 26 um die Schwenkachse K auf die Blattfeder 24 drückt und diese elastisch in Richtung des Haltebügels 8 verformt. Über die Federkraft der Blattfeder 24 wird das Klemmstück 22 radial nach innen gedrückt und bildet mit einem Abschnitt der Außenwandung des Haltebügels 8 einen Kraft- bzw. Reibschluss und drückt ferner den Haltebügel 8 reibschlüssig an die gegenüberliegende Seite der zylindrischen Ausnehmung des Gleitabschnitts 14.

Die Fig. 2 zeigt eine Querschnittsansicht entlang der Linie II-II in der Fig. 1, welche parallel zur Schwenkachse K und senkrecht zur Mittelachse A verläuft.

Der Gleitabschnitt 14 weist ferner eine Ausnehmung 30 auf, in welcher der Spannhebel 26, wenn sich dieser im gespannten Zustand befindet (wie in der Fig. 1 gezeigt), komplett im Gleitabschnitt 14 bzw. dem ersten Gehäuseabschnitt 10 aufgenommen ist und darin verschwindet. Die Ausnehmung 30 ist ferner so bemessen, dass man mit der Hand oder einem Werkzeug den Spannhebel 26 zum Betätigen greifen kann.

Der erste Gehäuseabschnitt 10 weist ferner einen dünnwandigen Hohlkörperabschnitt 32 auf, der Halterungsseitig an den Gleitabschnitt 14 angrenzt und einen Endabschnitt 34 des Haltebügels 8 umgibt. Wie aus der Fig. 3 ersichtlich ist, welche eine Schnittansicht entlang der Linie III-III in der Fig. 1 darstellt, weist der Hohlkörper 32 zwei nach innen vorstehende, einander gegenüberliegende und parallel zur Mittelachse A sich erstreckende Führungsrippen 36 auf, welche gleitend in entsprechende Längsnuten 38 eines am Endabschnitt 34 des Haltebügels 8 befestigten Gleitstücks 40 eingreifen. Dadurch, dass das Gleitstück 40 drehfest am Haltebügel 8 befestigt ist, stellt das Zusammenwirken von Führungsrippen 36 und Nuten 38 sicher, dass der Haltebügel 8 zwar entlang der Mittelachse A verschiebbar, jedoch nicht um diese drehbar ist. Etwaige äußere Krafteinwirkungen auf den Fahrzeugaußenspiegel bzw. den Haltebügel 8 werden von den Führungsrippen 36 aufgenommen. Die axiale Erstreckung der Führungsrippen 36 entspricht dabei zumindest dem maximalen Verschiebeweg des Haltebügels 8 in dem Gehäuse 6.

Der Hohlkörperabschnitt 32 in Verbindung mit den Führungsrippen 36 bildet einen Führungsabschnitt im Sinne der Erfindung. Somit wird der Haltebügel 8 zum einen am Gleitabschnitt 14 als auch an den Führungsrippen 36 geführt. Ferner nehmen der Gleitabschnitt 14 und die Führungsrippen 36 die Biegemomente auf. Aufgrund des langen Hebelarms zwischen Gleitabschnitt 14 und der Stelle, an welcher das Gleitstück 40 in den Führungsrippen 36 geführt ist, können die Biegekräfte gering gehalten werden.

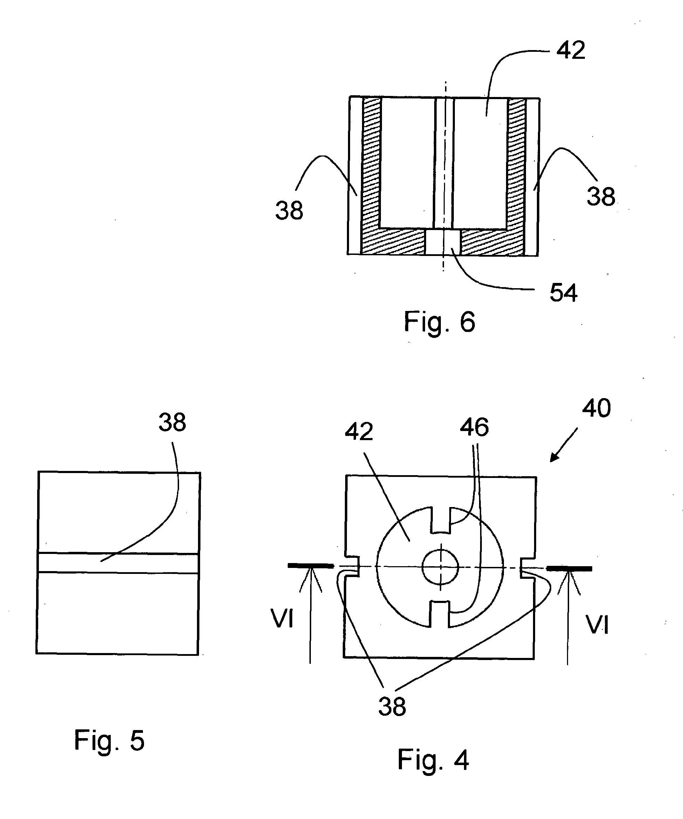

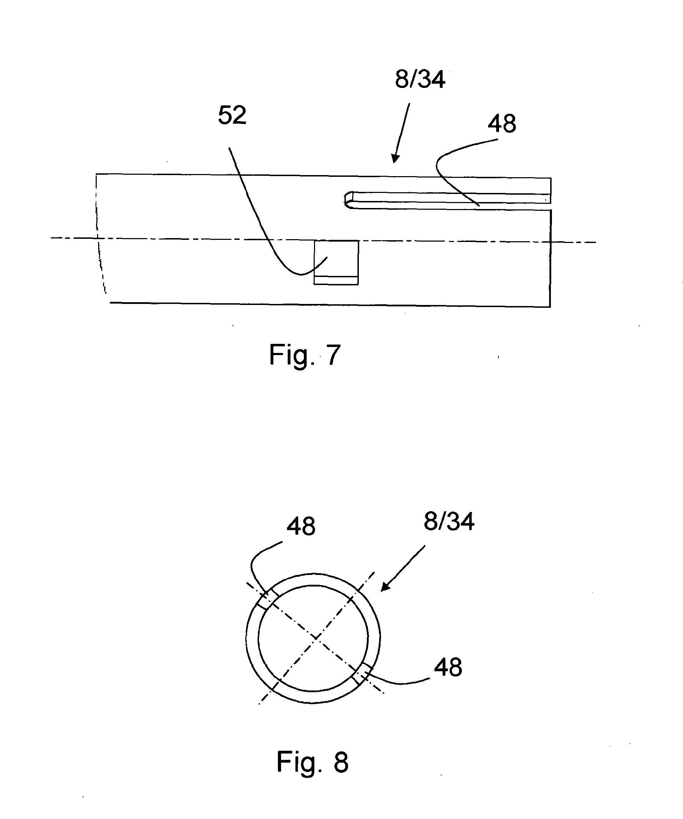

Die Fign. 4, 5 und 6 zeigen verschiedene Ansichten des Gleitstücks 40. Dabei ist die Fig. 4 eine Stirnansicht, die Fig. 5 eine Seitenansicht und die Fig. 6 eine Querschnittsansicht entlang der Linie VI-VI in der Fig. 4. Das Gleitstück 40 ist im Wesentlichen ein würfelförmiger Körper, der an zwei gegenüberliegenden Seiten die Längsnuten 38 und an einer dritten Seite eine zylindrische Ausnehmung 42 mit zwei nach innen vorstehenden, einander gegenüberliegenden und in axialer Richtung erstreckenden Vorsprünge 46, aufweist. Die Vorsprünge 46 greifen in Längsschlitze 48 ein, die am Endabschnitt 34 des Haltebügels 8 vorgesehen sind (siehe Fign. 7 und 8), wenn das Gleitstück 40 auf den Endabschnitt 34 des Haltebügels 8 aufgebracht wird. Das so gestaltete Gleitstück 40 hat eine hohe Festigkeit und kann über den Haltebügel 8 aufgebrachte Biege- und Torsionsmomente auf den ersten Gehäuseabschnitt 10 übertragen. Ferner handelt es sich bei dem Gleitstück 40 um ein integriertes Bauteil mit maßgeschneiderten Eigenschaften, welches darüber hinaus auch noch kostengünstig herstellbar ist.

Der Außendurchmesser des Endabschnitts 34 und der Innendurchmesser der Ausnehmung 42 sind als Presspassung toleriert. Ferner weist das Gleitstück 40 (nicht dargestellte) Schnapphaken auf, welche in einen entsprechenden Rücksprung bzw. in eine entsprechende Ausnehmung 52 (siehe Fig. 7) formelastisch und formschlüssig eingreifen. Dadurch befindet sich das Gleitstück 40 drehfest auf dem Haltebügel 8 und ist zudem axial fixiert.

Am Boden der Ausnehmung 42 ist eine zentrale Gewindebohrung 54 mit einem Trapezgewinde ausgebildet, welches mit einer Spindel 56 in Wirkverbindung steht, die über eine elektrische Stelleinheit 58, bestehend aus einem Elektromotor 60 und einem Getriebe 62 angetrieben wird. Die elektrische Stelleinheit 58 sowie die Spindel sind in der Fig. 1 lediglich schematisch dargestellt. Es ist jedoch zu beachten, dass ein halterungsseitiger Abschnitt der elektrischen Stelleinheit 58, z. B. ein Getriebedeckel 64, komplementär zum Innenumfang des ersten Gehäuseabschnitts 10 ausgebildet ist und somit die gänzlich im ersten Gehäuseabschnitt 10 befindliche Verstellmimik nach außen verschließen, vorzugsweise abdichten kann.

Wenn die Spindel 56 in die eine oder andere Richtung angetrieben wird, wird das mit der Spindel 56 in Eingriff befindliche Gleitstück 40 entlang der Achse der Spindel 56, welche mit der Mittelachse A des Endabschnitts 34 des Haltebügels 8 zusammenfällt und gleichzeitig die Verschiebeachse des Haltebügels 8 darstellt, bewegt und der mit dem Gleitstück 40 fest verbundene Haltebügel 8 axial verschoben. Dabei gleiten die Führungsrippen 36 des ersten Gehäuseabschnitts 10 in den Längsnuten 38 des Gleitstücks 40 und die Außenwandung des Haltebügels 8 an den Gleitleisten im Gleitabschnitt 14. Um Vibrationen zwischen Haltebügel 8 und Gehäuse 6 zu minimieren, bleibt hierbei der Spannhebel 26 geschlossen. Das Klemmstück 20 drückt also permanent auf den Haltebügel und hält die Spannung aufrecht. Der Elektromotor 60 muss daher beim Verfahren des Haltebügels 8 grundsätzlich die Reibungskraft zwischen Gleitlagerabschnitt 14 und Haltebügel 8 überwinden. Die zu überwindende Reibungskraft wird jedoch durch die Gleitleisten reduziert. Wenn sich der Fahrzeugaußenspiegel bzw. der Haltebügel 8 an der gewünschten Position befindet, kann die elektrische Stelleinheit 58 gestoppt werden und die Position wird über den Spannhebel 26 und das Klemmstück 20 mechanisch fixiert. Dadurch kann die elektrische Stelleinheit 58 entlastet und abgeschaltet werden.

Wenn keine Gleitleisten vorgesehen sind, kann alternativ vor dem Verfahren des Haltebügels 8 der Spannhebel 26 gelöst und nach dem Verfahren dieser gespannt werden.

Wie aus der Fig. 1 ferner ersichtlich ist, dient der erste Gehäuseabschnitt 10 zur teilweisen Aufnahme der fahrzeugseitigen Halterung 4. Dabei weist die Halterung 4 einen senkrecht zur Mittelachse A verlaufenden Hohlzylinderabschnitt 66, an welchem das Gehäuse 6 um eine Schwenkachse S schwenkbar befestigt ist, auf. Der zylindrische Abschnitt 66 der Halterung 4 weist an einem Ende eine angeformte Rastzähnegeometrie 68 auf und kann unter Zwischenschaltung eines Rastelements 70 mit einem Befestigungsabschnitt 72 des ersten Gehäuseabschnitts 10 über eine Schraubenverbindung 74 befestigt werden.

Auf der gegenüberliegenden Seite wird die Halterung 4 über den zweiten Gehäuseabschnitt 12 mit dem Gehäuse 6 verbunden. Dazu weist der zylindrische Abschnitt 66 der Halterung 4 eine Ausnehmung 76 auf, die zur Aufnahme einer zylinderförmigen Gleitlagerbuchse 78, die innen an einem Befestigungsabschnitt 80 ausgebildet ist, wenn der zweite Gehäuseabschnitt 12 mit dem ersten Gehäuseabschnitt 10 verbunden wird.

Wie den Fign. 1 und 3 ferner zu entnehmen ist, sind in den dünnwandigen Befestigungsabschnitten 72, 80 des ersten bzw. zweiten Gehäuseabschnitts 10, 12 Metalleinleger 82 in das Kunststoffgehäuse eingegossen, die zur Verstärkung der Befestigungsabschnitte 72, 80 und zur Krafteinleitung vom Gehäuse 6 in die Halterung 4 dienen.

Wie der Fig. 1 ferner zu entnehmen ist, weist der Befestigungsabschnitt 72 des ersten Gehäuseabschnitts 10 Nuten 84 auf, in welche am Rastelement 70 außenseitig angeformte Vorsprünge 86 formschlüssig eingreifen. Die Halterung 4 wird über das Rastelement 70 mit in den ersten Gehäuseabschnitt 10 eingegossene Metalleinleger 82 verschraubt. Dadurch ist das Rastelement 70 drehfest am ersten Gehäuseabschnitt 10. befestigt. Dieser Formschluss lässt sich alternativ auch durch eine Nut-Feder-Verbindung bewerkstelligen.

Der zylindrische Gelenkabschnitt 66 der Halterung 4 ist mittels einer (nicht gezeigten) Feder gegen das Rastelement 70 vorgespannt und der zylindrische Gelenkabschnitt 66 ist so zwischen dem ersten und dem zweiten Gehäuseabschnitt 10, 12 eingefasst, dass sich bei einem entsprechend aufgebrachten Schwenkmoment vorbestimmter Größe das Rastelement 70 gegen die Federvorspannung bezüglich der Rastzähnegeometrie 68 der Halterung 4 verdreht und so eine Schwenkbewegung zwischen dem Gehäuse 6 und der Halterung 4 zulässt.

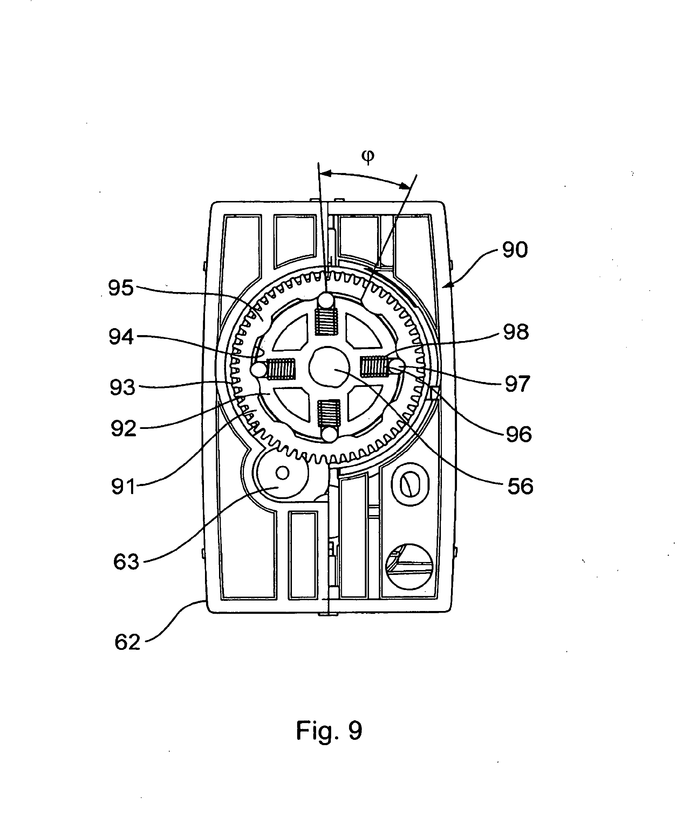

Fig. 9 zeigt eine Querschnittsansicht einer zwischen dem Getriebe 62 und der Spindel 56 geschalteten Kupplung 90. Die Kupplung 90 überträgt ein Drehmoment von einer Getriebestufe 63 des Getriebes 62 über eine Kupplungsglocke 91 auf einen Mitnehmer 92 und schließlich auf die mit dem Mitnehmer 92 drehfest verbundenen Spindel 56. Die Getriebestufe 63 kämmt mit einer Außenverzahnung 93 der Kupplungsglocke 91. Am Innenumfang 94 der zylindrisch oder ringförmig ausgebildeten Kupplungsglocke 91 sind über den Umfang gleichmäßig verteilte Vorsprünge bzw. Nocken 95 ausgebildet, welche mit über Druckfedern 96 radial nach außen vorgespannte Walzen 97 des Mitnehmers 92 zusammenwirken. Dieses Zusammenwirken und die Funktion der Kupplung 90 werden im Folgenden detailliert beschrieben.

Der Mitnehmer 92 weist radial verlaufende, nach außen mündende und über den Umfang gleichmäßig verteilte Ausnehmungen 98 (in der Fig. 9: vier Ausnehmungen) auf, in denen die Druckfedern 96 untergebracht sind. Diese Druckfedern 96 spannen die Walzen 97, die an ihren Enden angeordnet sind, radial nach außen gegen den Innenumfang 94 der Kupplungsglocke 91. Dabei befinden sich die Walzen 97 zum größten Teil in den Ausnehmungen 98. Wenn die Kupplungsglocke 91 über die Getriebestufe 63 angetrieben wird, rollen die Walzen 97 in Umfangsrichtung am Innenumfang 94 zwischen den Vorsprüngen 95 der Kupplungsglocke 91 solange ab, bis sie an einem der Vorsprünge 95 auflaufen. Die Vorsprünge 95 versuchen, die Walzen 97 gegen die Federkraft der Druckfedern nach innen zu verdrängen. Die Federkräfte sind so gewählt, dass sie die bei einem normalen Antrieb der Spindel 56 und Verfahren des Haltbügels nicht nach innen ausweichen, so dass die Walzen des Mitnehmers 92 und die Vorsprünge 95 der Kupplungsglocke 91 eine Art Formschluss bilden und somit Drehmomente von der Kupplungsglocke 91 auf den Mitnehmer 92 und somit auf die Spindel 56 übertragen.

Bei einem Richtungswechsel der Kupplungsglocke 91 bleibt der Mitnehmer 92 solange stehen, bis die Walzen 97 am in Drehrichtung nächsten Vorsprung 95 auflaufen und mit diesen den oben erwähnten Formschluss eingehen.

Um einen Überlastschutz zu gewährleisten, lassen sich die Walzen 97 bei einer vorbestimmten Drehmomentgrenze M_{K} von den Vorsprüngen 95 gegen die Druckfedern 96 soweit radial nach innen gedrückt, dass sie nach dem Prinzip einer Durchrastkupplung die Vorsprünge 95 überwinden und eine größere Relativdrehung zwischen Kupplungsglocke 91 und Mitnehmer 92 zulassen. Dadurch wird eine Schädigung der elektrischen Stelleinheit 38 unterbunden.

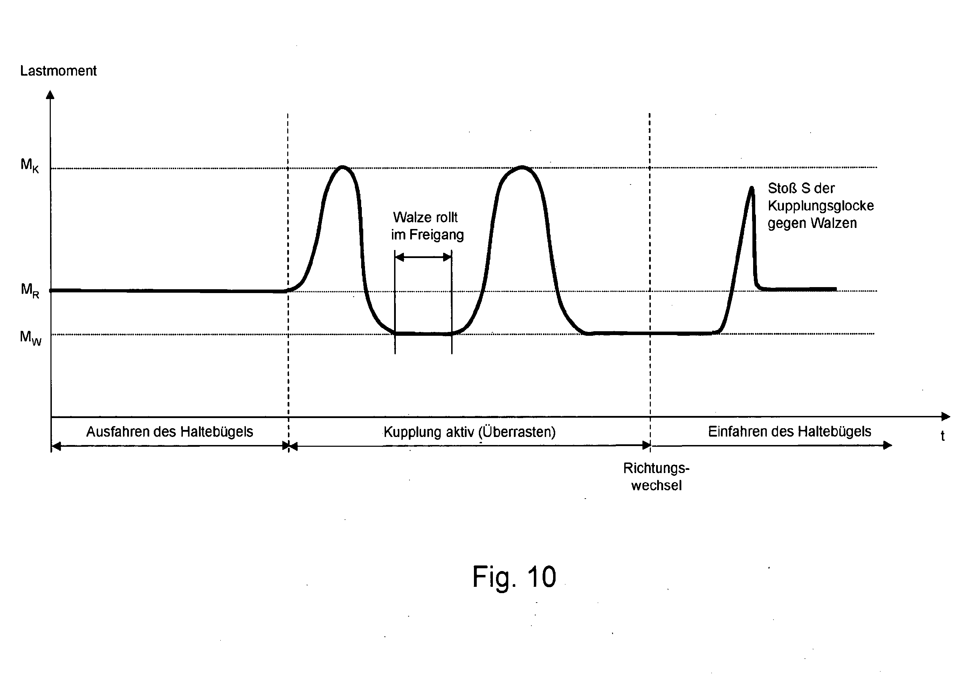

Die Fig. 10 zeigt ein Zeit-Drehmoment-Diagramm. Bei Ausfahren des Haltebügels 8 liegen die Walzen 97 an den Vorsprüngen 95 der Kupplungsglocke 91 an und übertragen so eine bestimmtes Drehmoment, das zumindest das Reibmoment M_{R} zwischen dem Haltebügel 8 und dem Klemmstück 20 in dem Gleitabschnitt 14 erreichen soll.

Wenn der Haltbügel 8 z. B. aufgrund eines Anschlags seine maximal ausgefahrene Position erreicht hat, lässt sich der Haltebügel 8 und somit die Spindel 56 bzw. der Mitnehmer 92 nicht mehr weiter drehen. Wenn die Kupplungsglocke 91 weiter angetrieben wird, erreicht die Kupplungsglocke 91 relativ schnell das Kupplungsmoment M_{K}, d.h. das über die Kupplung 90 maximal übertragbare Moment M_{K}, welches durch das Zusammenspiel der Vorsprünge 95 und der Druckfeder 96 bestimmt wird. Wird das Kupplungsmoment M_{K} erreicht, weichen die Walzen 97 radial nach innen aus, so dass die Vorsprünge 95 passieren können. In der Folge wälzen die Walzen 97 am Innenumfangsabschnitt 94 zwischen den Vorsprüngen 95 ab, d.h. die Walzen 97 rollen im Freigang. Das Rollreibmoment M_{W} zwischen Walzen 97 und Kupplungsglocke 91 liegt unterhalb des Reibungsmoments M_{R}, d.h. des normalerweise zu übertragenden Moments. Nach einem vorbestimmten Drehwinkel ϕ laufen die Walzen 97 wieder an den entsprechenden Vorsprüngen 95 auf und passieren diese bei Überschreiten des Kupplungsmoments M_{K}.

Wenn die Drehrichtung der Kupplungsglocke 91 wechselt, rollen die Walzen 97 in die entgegengesetzte Richtung bis zum nächsten Vorsprung. D.h. bei einem Richtungswechsel ist also möglich, die Bogenlänge des Freigangs (ϕ) lastfrei zu überwinden, bis die gegenüberliegenden Flanken der Vorsprünge 95 mit den Walzen 97 in Kontakt treten. Dabei wird ein Teil der Bewegungsenergie der Kupplungsglocke 91 und der Trägheitsmasse des Motors in Form eines Stoßes S an die Walzen 97 und damit an den Mitnehmer 92 weitergegeben, bevor sich der Formschluss zwischen den Walzen 97 und den Vorsprüngen 95, d.h. zwischen der Kupplungsglocke 91 und dem Mitnehmer 92 einstellt und das zu übertragenden Moment M_{R} übertragen wird.

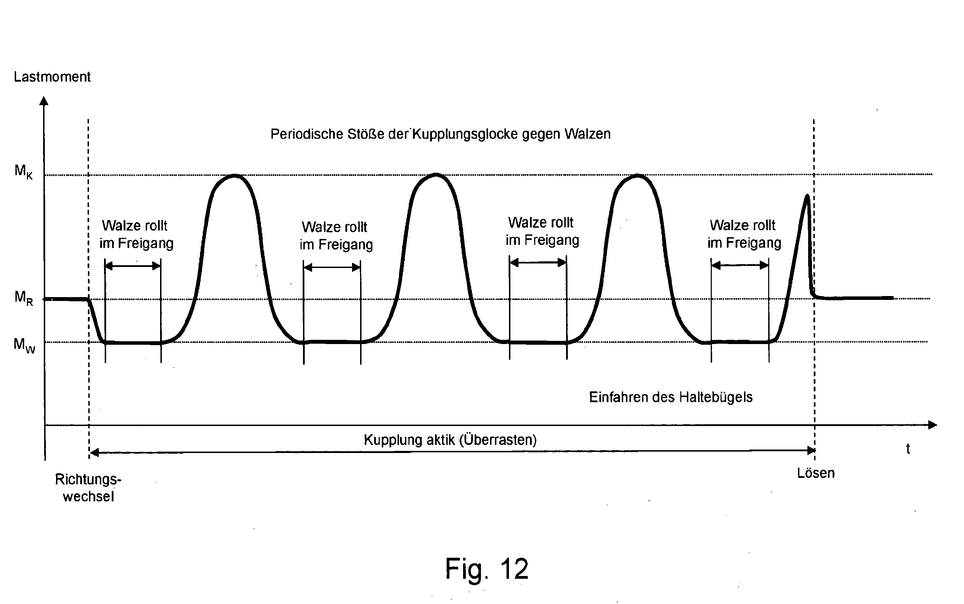

Dieser in der normalen Getriebetechnik unerwünschte Effekt ist bei der erfindungsgemäßen Außenspiegelanordnung beabsichtigt. Wird nämlich die Ausfahrbewegung des Haltebügels (Phase I in Fig. 10) solange fortgesetzt, bis der Kupplungsbetrieb einsetzt (Phase II in Fig. 10), ist ein leichtes Verspannen des Gleitstücks 40 mit der Spindel 56 nicht auszuschließen. Darüber hinaus kann der Haltebügel 8 auch aufgrund von Verschmutzungen im Gehäuse 6 verklemmen. Durch den Stoß bzw. Impulseintrag beim Richtungswechsel kann dieses Verspannen bzw. Verklemmen gelöst werden. Wenn diese Verklemmung nicht mit dem ersten Stoß gelöst wird und das Kupplungsmoment MK überschritten wird, überrastet die Kupplung 90. Der dadurch entstehende periodische Impulseintrag auf den Mitnehmer 92 und damit auf die Spindel 56 führt zum allmählichen Lösen der Schmutzpartikel. Somit lassen sich Schmutzpartikel, die ein Verklemmen zwischen Haltebügel 8 und Gehäuse 6 zur Folge haben, effektiv lösen (siehe Fig. 12).

Der Freigang hat noch den weiteren Vorteil, dass der Elektromotor 60 nahezu lastfrei bis zu einer Drehzahl kleiner gleich der Nenndrehzahl anlaufen kann. Bei einem Abschalten des Vorschubs wird sich die Ruhelage der Spindel 56 und damit des Mitnehmers 92 dergestalt einstellen, das die Walzen 97 bezogen auf die im Vorschubsfall vorliegende Drehrichtung direkt vor den Flanken der wellenartigen Erhebungen 95 in der Kupplungsglocke 91 zum Liegen kommen. Bei einem Richtungswechsel wird es also möglich sein, die Bogenlänge des Freigangs (ϕ) lastfrei zu überwinden, bis die den Flanken gegenüberliegenden Flanken mit den Walzen 97 in Kontakt treten.

Die Kupplung 90 weist somit ein großes Spiel (ϕ) zwischen Mitnehmer 92 und Kupplungsglocke 91 auf. Dies jedoch im Kontext der erfindungsgemäßen Außenspiegelanordnung 2 unproblematisch, da die kinematische Wirkkette zwischen Motor 60 und Haltebügel 8 durch die Klemmung des Klemmstücks 20 entkoppelt ist. Das Spiel in der Kupplung 90 wirkt sich also nicht als Spiel zwischen Haltebügel 8 und Gehäuse 6 aus.

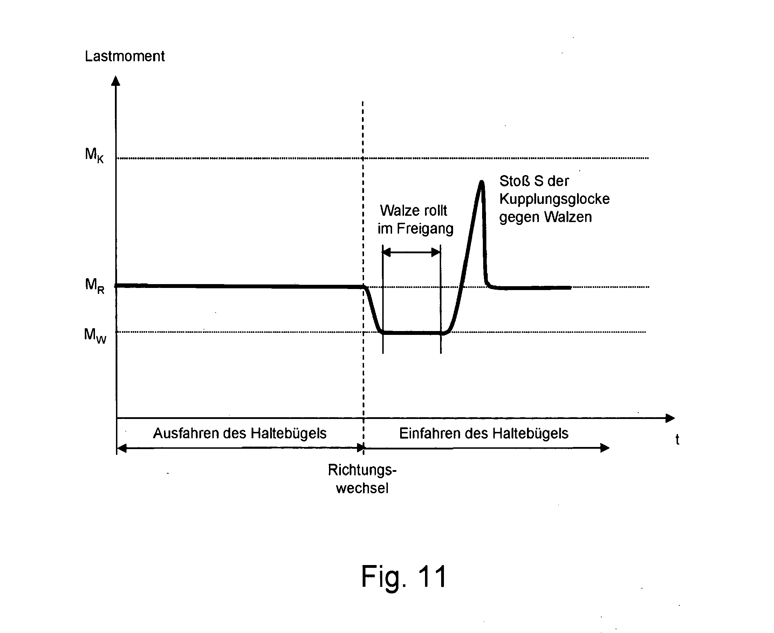

Fig. 11 zeigt ein weiteres Drehmoment-Zeit-Diagramm beim Verstellen des Haltebügels 8. Es zeigt den bei einem gewöhnlichen Drehrichtungswechsel ohne einem bei Überlast auftretenden Lastmoment. Da die Vorsprünge 95 am Innenumfang 94 der Kupplungsglocke 91 von einander beabstandet sind, dauert es ein gewisse Zeit, bis die Walzen 97 in die entgegengesetzte Richtung auf die Vorsprünge 95 am Innenumfang 94 der Kupplungsglocke 91 treffen. Das übertragbare Drehmoment fällt auf das Reibungsmoment M_{W} ab, das entsteht, wenn die Walzen 97 auf der Innenumfangsfläche 94 der Kupplungsglocke 91 abrollen. Wenn die Walzen 97 - bis dahin lastfrei - auf die Flanken der nächsten Vorsprünge 95 treffen, wirkt wieder ein trägheitsbedingtes Stoßmoment auf die Walzen 95, das jedoch schnell auf das normale Betriebsmoment abklingt.

Vorstehend wurde eine Außenspiegelanordnung für Kraftfahrzeuge und eine darin angeordnete selbsttätig schaltende Kupplung für eine Kraftfahrzeug-Außenspiegelverstellung beschrieben.

Selbstverständlich kann die beschriebene Außenspiegelanordnung innerhalb des Schutzbereichs der Ansprüche abgewandelt werden.

Zum Beispiel kann die Verstellung des Haltebügels über Seilzüge oder einen Zahnstangentrieb erfolgen.

Ferner können die zueinander komplementär gestalteten Elemente, wie z. B. die Verbindung zwischen dem Gleitstück und dem Endabschnitt des Haltebügels bzw. der Führungsrippen, umgekehrt gestaltet sind. Beispielsweise kann das Gleitstück längs verlaufende Vorsprünge aufweisen, die in entsprechenden Nuten im ersten Gehäuseabschnitt gleiten.

Die axiale Länge des Gehäuses kann entsprechend dem notwendigen Verschiebeweg des Haltebügels verkürzt oder verlängert werden.

Ferner können auch die Führungsrippen mit Metalleinlegern verstärkt werden. Alternativ kann das Gleitstück von allen Seiten, d.h. von vier Führungsrippen, geführt werden.

An den Führungsrippen und/oder ersten Gehäuseabschnitt können zur Begrenzung des maximalen Verschiebewegs Anschläge vorgesehen sein.

Auch kann der Metalleinleger am Befestigungsabschnitt des jeweiligen Gehäuseabschnitts je nach zu erwartenden Torsions- und Biegemomenten verlängert werden oder dicker gestaltet werden.

Ferner kann unter Umständen auf die Gleitleisten im Gleitabschnitt verzichtet werden bzw. können andere Materialien für die Gleitleisten verwendet werden.

Bei der beschriebenen Kupplungseinrichtung befinden sich die Erhebungen 95 am Innenumfang 94 der Kupplungsglocke 91 und wirken mit radial nach außen federvorgespannten Wälzkörper 97 zusammen. Je nach Anwendungsfall und zur Verfügung stehendem Bauraum können die Erhebungen 95 am inneren Kupplungsteil (Mitnehmer 92) vorgesehen sein und mit radial nach innen vorgespannten Wälzkörper 97 des äußeren Kupplungsteils (Kupplungsglocke 91) zusammenwirken.

Die erfindungsgemäße Kupplungseinrichtung ist nicht notwendigerweise zusammen mit der beschriebenen Außenspiegelanordnung anzuwenden, sondern ist als ein unabhängiges Maschinenelement zu betrachten, das auf andere Außenspiegelanordnungen und Systeme außerhalb dieses technischen Gebiets übertragbar ist. Die vorteilhaften Wirkungen der erfindungsgemäßen Kupplungseinrichtung kommen jedoch insbesondere bei motorisch verstellbaren Kraftfahrzeug-Außenspiegeln zu tragen, da diese aufgrund des Freigangs ein lastfreies Anfahren des Motors ermöglicht, der stoßartige Impulseintrag etwaige Verspannungen zwischen dem Gleitstück und der Spindel oder Verschmutzungen lösen kann und die Kupplungseinrichtung eine einfache und robuste Lösung darstellt.

## Patentansprüche

1. Kupplungseinrichtung (90) zur Übertragung einer Rotationsenergie zwischen einem Antrieb und einem Abtrieb, insbesondere zwischen einer elektrischen Stelleinheit (58) und einem Stellglied (56), wobei
die Kupplungseinrichtung (90) eine Übertragung eines Lastdrehmoments (M_{R}) von der elektrischen Stelleinheit (58) auf das Stellglied (56) in beide Richtungen erlaubt und bei einem Überlastmoment größer als einem vorbestimmten Grenzdrehmoment (M_{K}) selbsttätig eine Relativdrehung zwischen der elektrischen Stelleinheit (58) und dem Stellglied (56) erlaubt, **dadurch gekennzeichnet, dass**
die Kupplungseinrichtung (90) bei einem Drehmomentrichtungswechsel ohne vorheriges Überschreiten des Grenzdrehmoments (M_{K}) über einen vorbestimmten Freigangswinkel (ϕ) kein Lastdrehmoment (M_{R}) überträgt.

2. Kupplungseinrichtung (90) nach Anspruch 1, **dadurch gekennzeichnet, dass** der Freigangswinkel (ϕ) kleiner als 90° ist, insbesondere im Bereich von 15° bis 25° liegt.

3. Kupplungseinrichtung (90) nach Anspruch 1 oder 2, **dadurch gekennzeichnet, dass** die Kupplungseinrichtung (90) eine von der elektrischen Stelleinheit (58) angetriebene Kupplungsglocke (91) oder Kupplungsring und einen mit dem Stellglied (56) drehfest verbundenen Mitnehmer (92) aufweist, wobei der Mitnehmer (92) über den Umfang gleichmäßig verteilte, radial nach außen federbelastete und gegen eine Innenwandung (94) der Kupplungsglocke (91) bzw. des Kupplungsrings gespannte Wälzkörper (97) oder Gleitkörper aufweist; und
die Innenwandung (94) der Kupplungsglocke (91) über den Umfang gleichmäßig verteilte Erhebungen (95) aufweist, welche die Wälzkörper (97) oder Gleitkörper bei einem Überlastmoment größer als dem vorbestimmten Grenzdrehmoment (M_{K}) radial nach innen verdrängen.

4. Kupplungseinrichtung (90) nach Anspruch 3, **dadurch gekennzeichnet, dass** der Freigangswinkel (ϕ) durch den Abstand von zwei benachbarten Erhebungen (95), insbesondere durch den Abstand von einander zugewandten Flanken von zwei benachbarten Erhebungen (95), definiert wird.

5. Kupplungseinrichtung (90) nach Anspruch 3 oder 4, **dadurch gekennzeichnet, dass** in dem Mitnehmer (92) radial verlaufende, nach außen mündende und über den Umfang gleichmäßig verteilte Ausnehmungen (98) ausgebildet sind, in denen Druckfedern (96) angeordnet sind, die die Wälzkörper (97) bzw. Gleitkörper radial nach außen drücken, wobei die Wälzkörper (97) bzw. Gleitkörper in den Ausnehmungen (98) geführt sind.

6. Kupplungseinrichtung (90) nach einem der Ansprüche 3 bis 5, **dadurch gekennzeichnet, dass** die Federkonstante der Druckfedern (96) entsprechend den am Innenumfang (94) der angetriebenen Kupplungsglocke (91) ausgebildeten Erhebungen (95) so gewählt ist, dass die Wälzkörper (97) bzw. Gleitkörper durch die Erhebungen (95) zum Überwinden derselbigen nur dann ausreichend weit radial nach innen verdrängt werden, wenn an der Kupplungseinrichtung (90) ein Überlastmoment größer als das vorbestimmte Grenzdrehmoment (M_{K}) anliegt.

7. Kupplungseinrichtung (90) nach einem der Ansprüche 3 bis 6, **dadurch gekennzeichnet, dass** das Abrollmoment (M_{w}) der Wälzkörper (97) bzw. das Reibmoment (M_{w}) der Gleitkörper, um zwischen zwei Erhebungen (95) am Innenumfang (94) der Kupplungsglocke (91) in Umfangsrichtung die Wälzkörper (97) abzurollen bzw. die Gleitkörper zu verschieben, kleiner als das Lastdrehmoment (M_{R}) ist.

8. Kupplungseinrichtung (90) nach einem der Ansprüche 3 bis 7, **dadurch gekennzeichnet, dass** die Anzahl der Erhebungen (95) höher als die der Wälzkörper (97) oder Gleitkörper ist.

9. Außenspiegelanordnung (2) für Kraftfahrzeuge, insbesondere Nutzfahrzeuge, mit:
einer fahrzeugseitigen Halterung (4);
einem daran befestigten, vorzugsweise rastbar angelenkten, Gehäuse (6);
einem in dem Gehäuse (6) verschiebbar aufgenommenen Haltebügel (8) für einen Fahrzeugaußenspiegel; und
einer Kupplungseinrichtung (90) nach einem der Ansprüche 1 bis 7, wobei
der Haltebügel (8) über eine elektrische Stelleinheit (58) und eine mit dem Haltebügel (8) mittelbar oder unmittelbar verbundene Antriebsspindel (56) verstellbar ist und zwischen der elektrischen Stelleinheit (58) und der Abtriebsspindel (56) die Kupplungseinrichtung (90) geschaltet ist.

10. Außenspiegelanordnung (2) für Kraftfahrzeuge nach Anspruch 9, wobei
die Außenspiegelanordnung (2) ferner eine Klemmeinrichtung (20, 24, 26, 28), insbesondere ein über eine Nocke (28) eines am Gehäuse (6) schwenkbar angeordneten Spannhebels gegen eine Außenwandung des Haltebügels (8) spannbares Klemmstück (20), aufweist, welche über einen Kraft- bzw. Reibfluss eine Relativbewegung zwischen dem Haltebügel (8) und dem Gehäuse (6) der Außenspiegelanordnung (2) unterbindet; und
die elektrische Stelleinheit (58) den Haltebügel (6) selbst dann verstellen kann, wenn der Haltebügel (8) über die Klemmeinrichtung (20, 24, 26, 28) festgeklemmt ist, wobei das zum Verstellen des Haltebügels (8) notwendige und von der Kupplungseinrichtung (90) übertragbare Lastdrehmoment (M_{R}) größer als das von der Klemmeinrichtung (20, 24, 26, 28) aufgebrachte Reibungsmoment (M_{W}) und kleiner als das vorbestimmte Grenzdrehmoment (M_{K}) der Kupplungseinrichtung (90) ist.

## Claims

1. A clutch device (90) for the transmission of a rotational energy between a drive input and a drive output, in particular between an electric actuating unit (58) and an actuating element (56), wherein
the clutch device (90) permits a transmission of a load torque (M_{R}) from the electric actuating unit (58) to the actuating element (56) in both directions, and in the event of an overload torque greater than a predetermined threshold torque (M_{K}), automatically permits a relative rotation between the electric actuating unit (58) and the actuating element (56), **characterized in that**
the clutch device (90), in the event of a torque direction reversal without previous exceeding of the threshold torque (M_{K}), does not transmit the load torque (M_{R}) over a predetermined free-travel angle (ϕ).

2. The clutch device (90) according to claim 1, **characterized in that** the free-travel angle (ϕ) is less than 90°, in particular that the free-travel angle (ϕ) lies in the range from 15° to 25°.

3. The clutch device (90) according to claim 1 or 2, **characterized in that**
the clutch device (90) comprises a clutch bell (91) or clutch ring driven by the electric actuating unit (58) and a carrier (92) rotationally fixedly connected to the actuating element (56), wherein the carrier (92) comprises rolling elements (97) or sliding elements distributed evenly over the periphery and radial outwardly springloaded and pressed against an inner wall (94) of the clutch bell (91) or the clutch ring; and
the inner wall (94) of the clutch bell (91) comprises evenly distributed raised portions (95) over its periphery, wherein the raised portions (95) push the rolling elements (97) or sliding elements radially inwards in the event of an overload torque greater than the predetermined threshold torque (M_{K}).

4. The clutch device (90) according to claim 3, **characterized in that** the free-travel angle (ϕ) is defined by the distance between two adjacent raised portions (95), in particular by the distance of respectively facing flanks of two adjacent raised portions (95).

5. The clutch device (90) according to claim 3 or 4, **characterized in that** radially running recesses (98), which are outwardly opening and evenly distributed over the periphery, are formed in the carrier (92), and wherein compression springs (96) that press radial outwardly on the rolling elements (97) or sliding elements are arranged in the recesses (98), and wherein the rolling elements (97) or sliding elements are guided into the recesses (98).

6. The clutch device (90) according to claim 3 to 5, **characterized in that** the spring constant of the compression springs (96) is chosen corresponding to the raised portions (95) formed on the inner periphery of the driven clutch bell (91), such that the rolling elements (97) or sliding elements are pushed sufficiently radial inwardly by the raised portions (95) in order to overcome the same only if an overload torque which is larger than the predetermined threshold torque (M_{K}) is exerted on the clutch device.

7. The clutch device (90) according to claim 3 to 6, **characterized in that**, in order to roll the rolling elements (97) or push the sliding elements on the inner periphery of the clutch bell (91) between two raised portions (95) in the circumferential direction, the rolling torque (MW) of the rolling elements (97) or the frictional torque (M_{W}) of the sliding elements is smaller than the load torque (M_{R}).

8. The clutch device (90) according to claim 3 or 7, **characterized in that** the number of raised portions (95) is higher than the number of rolling elements (97) or sliding elements.

9. An exterior mirror arrangement (2) for motor vehicles, in particular utility vehicles, comprising:
a holder (4) mounted on a vehicle;
a housing (6) fixed to the holder (4), preferably latchably articulatedly connected to the holder (4);
a holding member (8) for a vehicle exterior mirror displaceably accommodated in the housing (6); and
a clutch device (90) according to one of claims 1 to 7,
wherein the holding member (8) is adjustable via an electric actuating unit (58) and a drive spindle (56) directly or indirectly connected to the holding member (8), and the clutch device (90) is connected between the electric actuating unit (58) and the drive spindle (56).

10. The exterior mirror arrangement (2) for motor vehicles according to claim 9, **characterized in that**:
the exterior mirror arrangement (2) further comprises a clamping device (20, 24, 26, 28), in particular a clamping piece (20) loadable against an external wall of the holding member (8) via a cam (28) of a clamping lever pivotably arranged at the housing (6) and which prevents, via a force-fit or frictional fit, a relative movement between the holding member (8) and the housing (6) of the exterior mirror arrangement (2); and
the electric actuating unit (58) can adjust the holding member (8) even when the holding member (8) is fixedly clamped via the clamping device (20, 24, 26, 28), wherein the load torque (M_{R}) necessary for adjusting the holding member (8) and transmittable by the clutch device (90) is greater than the frictional torque (M_{W}) exerted by the clamping device (20, 24, 26, 28) and is smaller than the predetermined threshold torque (M_{K}) of the clutch device.

## Revendications

1. Dispositif d'accouplement (90) pour la transmission d'une énergie de rotation entre un organe moteur et un organe de sortie, en particulier entre une unité de réglage électrique (58) et un actionneur (56), où
ledit dispositif d'accouplement (90) permet une transmission bidirectionnelle d'un couple de charge (M_{R}) de l'unité de réglage électrique (58) à l'actionneur (56) et permet une rotation relative automatique entre l'unité de réglage électrique (58) et l'actionneur (56) en cas de couple de surcharge supérieur à un couple limite (M_{K}) prédéterminé, **caractérisé en ce que**
ledit dispositif d'accouplement (90) ne transmet aucun couple de charge (M_{R}) en cas d'inversion du sens de couple sans dépassement préalable du couple limite (M_{K}) au-delà d'un angle de jeu (ϕ) prédéterminé.

2. Dispositif d'accouplement (90) selon la revendication 1, **caractérisé en ce que** l'angle de jeu (ϕ) est inférieur à 90°, et est en particulier compris entre 15° et 25°.

3. Dispositif d'accouplement (90) selon la revendication 1 ou 2, **caractérisé en ce que** ledit dispositif d'accouplement (90) comprend une cloche d'accouplement (91) ou une bague d'accouplement entraînée par l'unité de réglage électrique (58) et un entraîneur (92) raccordé solidairement en rotation à l'actionneur (56), ledit entraîneur (92) présentant des corps de roulement (97) ou des corps de glissement régulièrement répartis sur sa périphérie, contraints par ressort radialement vers l'extérieur et serrés contre une paroi intérieure (94) de la cloche d'accouplement (91) ou de la bague d'accouplement ; et
**en ce que** la paroi intérieure (94) de la cloche d'accouplement (91) présente des saillies (95) régulièrement réparties sur sa périphérie, qui contraignent radialement vers l'intérieur les corps de roulement (97) ou les corps de glissement en cas de couple de surcharge supérieur au couple limite (M_{K}) prédéterminé.

4. Dispositif d'accouplement (90) selon la revendication 3, **caractérisé en ce que** l'angle de jeu (ϕ) est défini par l'espacement entre deux saillies (95) contiguës, en particulier par l'espacement entre les flancs opposés de deux saillies (95) contiguës.

5. Dispositif d'accouplement (90) selon la revendication 3 ou 4, **caractérisé en ce que** des cavités (98) à extension radiale, débouchant à l'extérieur et régulièrement réparties périphériquement sont formées dans l'entraîneur (92), où sont disposés des ressorts de pression (96) contraignant radialement vers l'extérieur les corps de roulement (97) ou les corps de glissement, les corps de roulement (97) ou les corps de glissement étant insérés dans les cavités (98).

6. Dispositif d'accouplement (90) selon l'une des revendications 3 à 5, **caractérisé en ce que** la constante d'élasticité des ressorts de pression (96) est sélectionnée en fonction des saillies (95) formées sur la périphérie intérieure (94) de la cloche d'accouplement (91) entraînée, de telle manière que les corps de roulement (97) ou les corps de glissement ne soient suffisamment contraints radialement vers l'intérieur par les saillies (95) pour franchir celles-ci que si un couple de surcharge supérieur au couple limite (M_{K}) prédéterminé est appliqué sur le dispositif d'accouplement (90).

7. Dispositif d'accouplement (90) selon l'une des revendications 3 à 6, **caractérisé en ce que** le couple de roulement (M_{W}) des corps de roulement (97) ou le couple de friction (M_{W}) des corps de glissement pour rouler les corps de roulement (97) entre deux saillies (95) sur la périphérie intérieure (94) de la cloche d'accouplement (91) dans la direction périphérique ou déplacer les corps de glissement, est inférieur au couple de charge (M_{R}).

8. Dispositif d'accouplement (90) selon l'une des revendications 3 à 7, **caractérisé en ce que** le nombre des saillies (95) est supérieur à celui des corps de roulement (97) ou des corps de glissement.

9. Dispositif de rétroviseur extérieur (2) pour véhicules automobiles, en particulier pour véhicules utilitaires, avec :
un support (4) fixé sur le véhicule ;
un boîtier (6) fixé contre celui-ci, de préférence articulé de manière enclenchable ;
un étrier de maintien (8) pour un rétroviseur extérieur de véhicule, logé de manière mobile dans le boîtier (6) ; et
un dispositif d'accouplement (90) selon l'une des revendications 1 à 7, où
l'étrier de maintien (8) est réglable au moyen d'une unité de réglage électrique (58) et d'un arbre (56) d'organe moteur directement ou indirectement raccordé à l'étrier de maintien (8), et le dispositif d'accouplement (90) est monté entre l'unité de réglage électrique (58) et l'arbre (56) d'organe de sortie.

10. Dispositif de rétroviseur extérieur (2) pour véhicules automobiles selon la revendication 9, où ledit dispositif de rétroviseur extérieur (2) comprend en outre un dispositif de serrage (20, 24, 26, 28), en particulier une pièce de serrage (20) pouvant être serrée contre une paroi extérieure de l'étrier de maintien (8) au moyen d'une came (28) d'un levier de serrage disposé de manière pivotante contre le boîtier (6), ladite pièce de serrage empêchant par adhérence ou par frottement un déplacement relatif entre l'étrier de maintien (8) et le boîtier (6) du dispositif de rétroviseur extérieur (2) ; et où
l'unité de réglage électrique (58) peut déplacer l'étrier de maintien (6) même si l'étrier de maintien (8) est bloqué par le dispositif de serrage (20, 24, 26, 28), le couple de charge (M_{R}) exigé pour le déplacement de l'étrier de maintien (8) et transmissible par le dispositif d'accouplement (90) étant supérieur au couple de friction (M_{W}) appliqué par le dispositif de serrage (20, 24, 26, 28) et inférieur au couple limite (M_{K}) prédéterminé du dispositif d'accouplement (90).
